Europäisches Patentamt

European Patent Office

Office européen des brevets

(19)

(11) Publication number: **0 307 042 B1**

## EUROPEAN PATENT SPECIFICATION

(12)

(45) Date of publication of patent specification: **23.12.92**

(51) Int. Cl.5: **A01C 15/00**, B65D 90/48

(21) Application number: **88201892.2**

(22) Date of filing: **05.09.88**

(54) A machine for spreading material.

(30) Priority: **07.09.87 NL 8702105**

(43) Date of publication of application:
**15.03.89 Bulletin 89/11**

(45) Publication of the grant of the patent:
**23.12.92 Bulletin 92/52**

(84) Designated Contracting States:
**DE FR GB NL**

(56) References cited:
**EP-A- 0 163 353**
**EP-A- 0 225 836**
**FR-A- 2 031 811**
**US-A- 2 570 952**
**US-A- 3 443 724**

**TRANSPORT OPSLAG, vol. 11, no. 4, 23rd April 1987, page 21, Misset - Transprot + Opslag, Doetinchem, NL; "Niveaumeting van silo's en tanks"**

(73) Proprietor: **C. van der Lely N.V.
Weverskade 10 P.O. Box 26
NL-3155 ZG Maasland(NL)**

(72) Inventor: **van der Lely, Cornelis
7, Brüschenrain
CH-Zug(CH)**

(74) Representative: **Mulder, Herman et al
Octrooibureau Van der Lely N.V. Weverskade
10 P.O. Box 26
NL-3155 ZG Maasland(NL)**

EP 0 307 042 B1

## Description

The invention concerns a machine for spreading material, in particular granular and/or pulverulent material such as fertilizer, which machine comprises a frame, a hopper and at least one spreader member.

A machine of this kind is known from EP-A-0 163 353.

It is an object of the invention to obtain with a machine of the above-defined type in a simple manner a proper indication as to the quantity of material spread by the spreader member per unit of time, per unit of length to be travelled and/or per surface unit to be spread.

According to the invention, this can be achieved when a distance measuring device is provided above the hopper, by means of which the position of the upper surface level of the quantity of material in the hopper can be measured, the distance measuring device is capable of movement in such a manner that it can scan the upper surface level of the quantity of material in the hopper. Thus, there can be performed a measurement which is based on the quantity of material contained in the hopper at a given instant, so that from this information can be established the quantity of material already spread. This provides a proper indication as to how much material has been spread per unit of time, per unit of length to be travelled and/or per unit of surface. During operation, the material level in the hopper will drop, so that the said level is a proper indication as to the quantity of material still present therein as well as to that which has already been spread therefrom.

Using the distance measuring device, it is possible to determine rapidly and in an accurate manner the position of the upper surface of the quantity of material and hence the quantity of material contained in the hopper itself. This in particular so, because by means of the movable distance measuring device the upper surface of the quantity of material in the hopper can be observed advantageously and rapidly in a plurality of points.

From the article "Niveaumeting van silo's en tanks" (Transport + Opslag, april 1987) it is known to use a distance measuring device for obtaining indications about the contents of silo's and tanks. However from this article it is not known to move the distance measuring device for scanning the upper surface level of the material in the silo's or tanks.

An advantageous embodiment is obtained when the distance measuring device continuously scans the upper surface of the contents of the hopper in accordance with a fixed pattern. In a further embodiment of the machine according to the invention, the measurements obtained by the distance measuring device are processed electronically in an electronic mechanism, the arrangement being such that the quantity of material spread per unit of time and/or per unit of surface area can be displayed on a display device connected to the mechanism.

For a better understanding of the invention and to show how the same may be carried into effect, reference will now be made, by way of example, to the accompanying drawings, in which:

Figure 1 is a side view of an embodiment of a machine according to the invention, which machine is coupled to the lifting hitch of a tractor;

Figure 2 is a plan view of the machine in accordance with Figure 1.

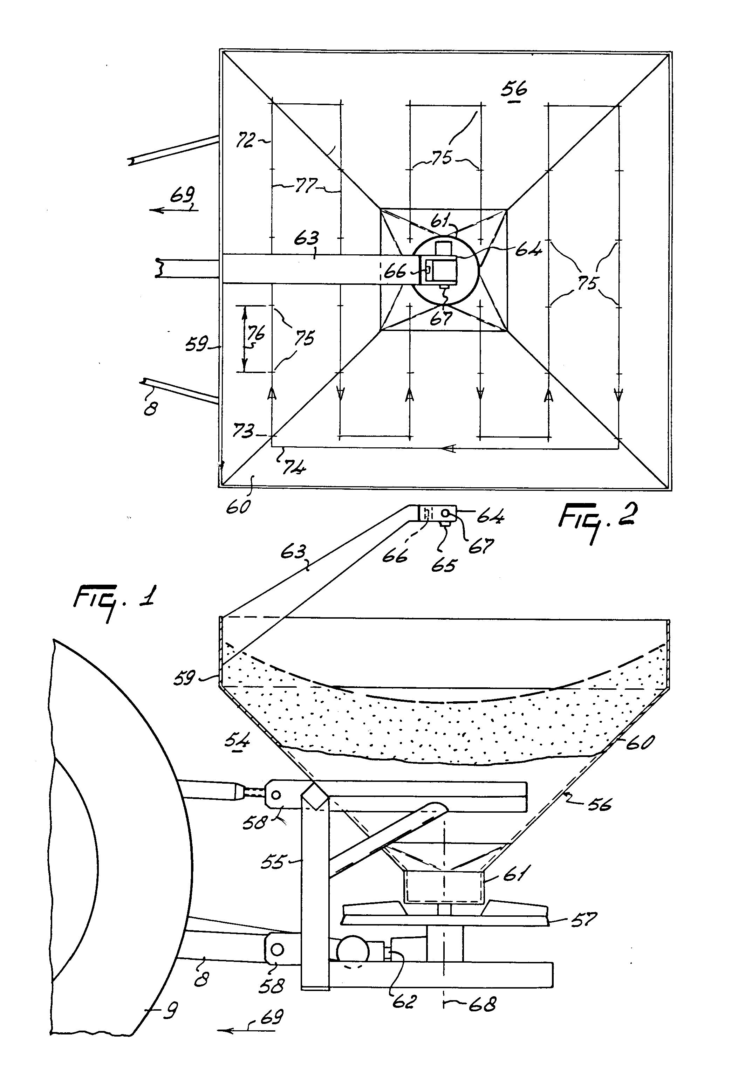

Figures 1 and 2 show a machine 54 which comprises a frame 55 to which are fitted a hopper 56 and a spreader member 57. The frame 55 includes connecting means 58, by means of which the machine can be coupled to the lifting hitch of a tractor or a suchlike vehicle 9. In this embodiment, the hopper 56 is, seen in plan view, rectangular and square. In the vertical position of the machine, the upper portion of the hopper 56 has vertical sides 59. This upper portion is contiguous to a portion 60 which tapers downwardly to form a nozzle. This nozzle portion 60 also has a square cross-section with equal sides which converge downwardly and end in a cylindrical discharge member 61. The discharge member 61 is provided with discharge outlets which can be closed to a greater or lesser extent by means of a closing member in such a manner that the quantity of material which can flow to the spreader member 57 via the discharge member per unit of time is adjustable. In this embodiment, there is provided only one spreader member 57 which, during operation, can be caused to rotate in the desired direction. To that end, the spreader member 57 is coupled via transmission members (not shown) to a drive shaft 62 which can be coupled to e.g. the power take-off shaft of a tractor or a suchlike vehicle 9. A supporting arm 63 is mounted to the side of the hopper which, taken in the direction of operative travel 63 of the machine shown in Figures 1 and 2, is the leading side. This supporting arm 63 extends obliquely upwardly in such a manner that its end, seen in plan view, is located near the centre of the hopper. The supporting member 63 is designed as a supporting arm and is provided with a carrier 64 at its upper side. On this carrier 64 there is mounted a measuring device 65 in the form of a distance measuring device. Preferably, the measuring device 65 is provided capable of movement about two pivot pins 66 and 67, which pivot pins are arranged perpendicularly to each other and extend horizontally when the machine is in the vertical position. In this embodiment, these pivot pins are positioned such that the pivot pin 66 extends in the direction of travel 69 and the pivot pin 67 perpendicularly thereto.

The measuring device 65 is drivable such by e.g. a stepper motor that, during operation of the machine, it can be given a constant movement about the pivot pins 66 and 67. The measuring device 65 and its mode of movement are such that the measuring device can measure the distance to the upper surface of the quantity of material in the hopper 56.

During operation, the implement is coupled via the connecting members 58 to the lifting hitch of a tractor or a suchlike vehicle. The drive shaft 62 is connected to the power take-off shaft via an intermediate shaft, thereby providing that, during operation, the spreader member 57 is caused to rotate about an upwardly extending rotary axis 68. In this embodiment, the rotary axis 68 coincides with the centre line of the hopper 56 and extends vertically when the machine is in the vertical position. During operation, the machine is moved in the direction indicated by the arrow 69, so that the material is spread by the spreader member through a predetermined width relative to the direction of operative travel to either one side or to both sides thereof. During operation, the material to be spread is carried along in the hopper 56 and fed therefrom to the spreader member 57 via the discharge member 61. It will be the object to spread the material in a predetermined quantity per unit of surface area and/or per unit of time. The quantity actually spread, which is adjustable via the setting of the discharge member, e.g. in dependence on the rate of travel and the spread width, can be checked during operation. In accordance with the invention, an indication as to the quantity of material actually flowing from the hopper per unit of time and/or per unit of length to be driven and spread by the spreader member is obtained on the basis of the location and the shape of the surface of the upper level of the quantity of material in the hopper. During the flow of the material from the hopper, the position of the material and the shape of the upper layer thereof in the hopper will change. As a result thereof, the distance from the upper surface of the quantity of material in the hopper relative to the measuring device 65 will change during operation. Starting from a horizontal position of the upper surface of the quantity of material and the machine being in the vertical position, the material will flow, seen in plan view, from the centre towards the discharge member 61, because of its central position in the hopper. As a result thereof, the upper surface of the quantity of material will start to sag from the centre and it will start to cave in there. According as this depression reaches a certain value, the material will flow from around the centre of the upper surface towards the centre, so that during the entire procedure of emptying of the hopper the upper surface of the quantity of material will pass through a certain change pattern as regards shape. The change of this pattern can be established empirically in dependance on the flow of different quantities of material from the hopper. The distance from this upper surface to the distance measuring device can be observed by the distance measuring device during operation. Via the distance measuring device and an electronic mechanism (not shown in further detail) coupled thereto, this observation can be translated in dependence on the empirically established values in such manner that on a display device (not shown) can be displayed to the driver of e.g. the tractor to which the machine is coupled the quantity of material that is spread per unit of time and/or per unit of length to be driven. During operation, the distance measuring device will perform a predetermined movement about the pivot pins 66 and 67 in such a manner that it passes through an imaginary pattern along e.g. a line 72. This pattern can be passed through from e.g. the point 73 to the point 74. This line 72 can be passed through in accordance with the arrows shown therein. As in this embodiment, the line 72 may follow a zigzag course having parallel portions 77 which extend transversely to the direction of operative travel 69. It is, for example, possible to continuously measure in spaced-apart points 75 on this line the distance between the level of the material in the hopper and the distance measuring device. This line 72 may, for example, be assumed to be in the region of the upper side of the hopper 56. When the surface level of the quantity of material in the hopper falls to below the upper side of the hopper 55, the distance will be measured via the shown line in points of the upper surface level of the quantity of material that are located in the extension between the measuring device and the line shown. Thus, during operation and dropping of the level of the quantity of material in the hopper, the change in the position of the level in the hopper can be measured continuously. Thus, a proper indication as to the quantity of material present in the hopper is obtained and, hence, one as to the quantity of material fed from the hopper to the spreader member and spread by the spreader member, respectively, per unit of time and/or per unit of length driven. In dependence on the rate of travel and on the width through which the material is spread, this indication will furnish a clue as to the quantity of material spread per unit of surface area. The data as to the rate of travel and the spread width can be inputted in e.g. the electronic mechanism either manually or automatically on the basis of the rate of travel and the spread width. Optionally, the measuring points 75 may be spaced apart by a greater or lesser distance 76 in dependence on e.g. the required measuring accuracy and/or on the shape of the hopper, in dependence whereon the upper surface level of the material in the hopper can change. It will be obvious that, for example, a measuring device 65 as shown in the embodiment may alternatively be used in a machine comprising a hopper with two discharge nozzles ending in discharge members below each of which a spreading member is provided. The pattern 72 passed through will then, for example, have a shape which is adapted to the hopper. The position of the measuring points wherein the distance from the upper surface level of the quantity of material in the hopper is measured may also be chosen in dependence on the manner in which the surface level will change due to the flow of the material from the hopper.

The data produced by the measuring device 65 can be conveyed to an electronic calculating mechanism or to a display device, respectively, connected e.g. via flexible connections to the measuring device 65. Thus, the display device e.g. constituting part of the electronic calculating mechanism can be mounted near the driver's seat, from where the machine is operated by the driver. If so desired, via the electronic mechanism there can be provided an automatic control of the discharge member, so that e.g. this discharge member can be set in dependence on the rate of travel of the machine. If the indication obtained via the measuring device 65 does not tally with the flow-out of the desired quantity of material per unit of time and/or per distance covered, then the flow rate can be adjusted via the discharge member 61.

Using the machine according the invention, of which one embodiment is shown in the preceding constructional example, there can be provided a simple machine, by means of which the desired quantity of material to be spread can be obtained and checked in an advantageous manner.

## Claims

1.  A machine for spreading material, in particular granular and/or pulverulent material such as fertilizer, which machine (54) comprises a frame (55), a hopper (56) and at least one spreader member (57), characterized in that a distance measuring device (65) is provided above the hopper (56), by means of which the position of the upper surface level of the quantity of material in the hopper can be measured, the distance measuring device (65) is capable of movement in such a manner that it can scan the upper surface level of the quantity of material in the hopper.

2.  A machine as claimed in claim 1, characterized in that the distance measuring device (65) is driven by a stepper motor with the object of scanning the contents of the hopper (56).

3.  A machine as claimed in claims 1 or 2, characterized in that the distance measuring device (65) scans the position of the upper surface level of the quantity of material in the hopper (56) by means of ultrasonic or infrared waves.

4.  A machine as claimed in any one of claims 1 to 3, characterized in that the measurements are processed electronically by the distance measuring device (65) in an electronic mechanism, the arrangement being such that the quantity of material spread per unit of time and/or per unit of surface area can be displayed on a display device connected to the said mechanism.

5.  A machine as claimed in any one of claims 1 to 4, characterized in that the distance measuring device (65) is connected to the hopper (56) by a supporting arm (63).

6.  A machine as claimed in any one of the preceding claims, characterized in that the machine includes a spreader member (57) which is rotatable about an upwardly extending rotary axis (68) and to which the material is fed from the hopper during operation.

7.  A machine as claimed in any one of the preceding claims, characterized in that the machine includes coupling members (58), by means of which the machine can be coupled to the lifting hitch (8) of a tractor or a suchlike vehicle.

## Patentansprüche

1.  Streugerät, insbesondere für körniges und/oder pulvriges Gut wie Kunstdünger, mit einem Rahmen (55), einem Vorratsbehälter (56) und mindestens einem Streuglied (57), dadurch gekennzeichnet, daß oberhalb des Vorratsbehälters (56) ein Entfernungsmesser (65) vorgesehen ist, mit dem die Höhenlage der Oberfläche der im Vorratsbehälter befindlichen Gutmenge zu messen ist, und daß der Entfernungsmesser (65) derart bewegbar ist, daß er die Oberflächenhöhe der im Vorratsbehälter befindlichen Materialmenge abtasten kann.

2.  Streugerät nach Anspruch 1, dadurch gekennzeichnet, daß der Entfernungsmesser (65) zum Abtasten des Inhalts des Vorratsbehälters (56) von einem Schrittschaltmotor angetrieben ist.

3. Streugerät nach Anspruch 1 oder 2, dadurch gekennzeichnet, daß der Entfernungsmesser (65) die Höhenlage der Oberfläche der im Vorratsbehälter (56) befindlichen Gutmenge (56) mittels Ultraschall- oder Infrarot-Strahlung abtastet.

4. Streugerät nach einem der Ansprüche 1 bis 3, dadurch gekennzeichnet, daß die Messungen von dem Entfernungsmesser (65) elektronisch in einer elektronischen Einrichtung ausgeführt werden, wobei die Anordnung so getroffen ist, daß die in der Zeiteinheit und/oder pro Flächeneinheit ausgestreute Gutmenge an einer Anzeigevorrichtung angezeigt werden kann, die mit der elektronischen Einrichtung verbunden ist.

5. Streugerät nach einem der Ansprüche 1 bis 4, dadurch gekennzeichnet, daß der Entfernungsmesser (65) mit dem Vorratsbehälter (56) durch einen Tragarm (63) verbunden ist.

6. Streugerät nach einem der vorhergehenden Ansprüche, dadurch gekennzeichnet, daß das Gerät ein Streuglied (57) aufweist, das um eine aufwärts gerichtete Rotationsachse (68) drehbar ist, und dem das Gut im Betrieb aus dem Vorratsbehälter zugeführt wird.

7. Streugerät nach einem der vorhergehenden Ansprüche, dadurch gekennzeichnet, daß das Gerät Kupplungsglieder (58) aufweist, mit denen es an die Hebevorrichtung (8) eines Schleppers oder ähnlichen Fahrzeugs anzuschließen ist.

**Revendications**

1. Machine pour épandre de la matière, en particulier de la matière granulaire et/ou pulverulente telle que de l'engrais, laquelle machine (54) comprend un châssis (55), une trémie (56) et au moins un organe épandeur (57), caractérisée en ce qu'un dispositif mesureur de distance (65) est prévu au dessus de la trémie (56) au moyen duquel la position du niveau de la surface supérieure de la quantité de matière dans la trémie peut être mesurée, le dispositif mesureur de distance (65) étant capable de mouvement de telle manière qu'il peut explorer le niveau de la surface supérieure de la quantité de matière dans la trémie.

2. Machine selon la revendication 1, caractérisée en ce que le dispositif mesureur de distance (65) est entraîné par un moteur pas-à-pas dans le but d'explorer le contenu de la trémie (56).

3. Machine selon la revendication 1 ou 2, caractérisée en ce que le dispositif mesureur de distance (65) explore la position du niveau de la surface supérieure de la quantité de matière dans la trémie (56) au moyen d'ondes ultrasonores ou infrarouges.

4. Machine selon l'une quelconque des revendications 1 à 3, caractérisée en ce que les mesures sont traitées par voie électronique par le dispositif mesureur de distance (65) dans un mécanisme électronique, l'agencement étant tel que la quantité de matière épandue par unité de temps et/ou par unité de surface peut être affichée sur un dispositif d'affichage relié audit mécanisme.

5. Machine selon l'une quelconque des revendications 1 à 4, caractérisée en ce que le dispositif mesureur de distance (65) est relié à la trémie (56) par un bras de support (63).

6. Machine selon l'une quelconque des revendications précédentes, caractérisée en ce que la machine comporte un organe épandeur (57) qui peut tourner autour d'un axe de rotation (68) s'étendant vers le haut et auquel la matière est débitée à partir de la trémie pendant le travail.

7. Machine selon l'une quelconque des revendications précédentes, caractérisée en ce que la machine comporte des moyens d'attelage (58) au moyen desquels la machine peut être attelée au dispositif d'attelage/levage (8) d'un tracteur ou d'un véhicule similaire.

56

72

69

63

66

61

64

75

67

76 75

59

8

73

74

60

Fig. 2

64

63

67

66 65

Fig. 1

59

54

58

55

60

56

61

57

8

58

62

68

9

69